# EUROPEAN PATENT SPECIFICATION

(11) **EP 1 366 218 B1**
(45) Date of publication and mention of the grant of the patent: **06.10.2004**
(21) Application number: 02701413.3
(22) Date of filing: 21.02.2002
(51) Int. Cl.: C25C 7/00, C25C 3/34, G21C 19/48

(54) **ELECTROREFINING PROCESS FOR SEPARATING METALS**
ELEKTRORAFFINIERUNGSVERFAHREN ZUR AUFTRENNUNG VON METALLEN
PROCEDE D'ELECTRORAFFINAGE PERMETTANT DE SEPARER DES METAUX

(30) Priority: 21.02.2001 GB 0104253
(43) Date of publication of application: 03.12.2003
(73) Proprietor: British Nuclear Fuels PLC, Warrington, Cheshire WA3 6AS (GB)
(72) Inventor: BRADLEY, Antonia, School of Chemistry, Belfast BT9 5AG (GB); COGAN, Christopher J., British Nuclear Fuels Plc, Warrington, Cheshire WA3 6AS (GB); HANSON, Bruce C., British Nuclear Fuels Plc, Warrington, Cheshire WA3 6AS (GB); LEWIN, Robert G., British Nuclear Fuels Plc, Seascale, Cumbria CA20 1PG (GB); OGDEN, Mark D., British Nuclear Fuels Plc, Warrington, Cheshire WA3 6AS (GB); OWENS, Scott L., British Nuclear Fuels Plc, Warrington, Cheshire WA3 6AS (GB); PITNER, William R., School of Chemistry, Belfast BT9 5AG (GB); ROONEY, David W., School of Chemistry, Belfast BT9 5AG (GB); SANDERS, David, School of Chemistry, Belfast BT9 5AG (GB); SMART, Neil G., British Nuclear Fuel plc, Seascale, Cumbria CA20 1PG (GB); TAYLOR, Richard J., British Nuclear Fuels Plc, Warrington, Cheshire WA3 6AS (GB); THIED, Robert C., British Nuclear Fuels Plc, Seascale, Cumbria CA20 1PG (GB)
(74) Representative: Harrison Goddard Foote
(86) International application number: PCT/GB2002/000729
(87) International publication number: WO 2002/066712

(56) References cited:
- WO-A-01/13379
- US-A- 5 380 406
- US-A- 5 531 868
- US-A- 5 650 053

## Description

### FIELD OF THE INVENTION

This invention relates to processes for the separation of metals from compositions containing metals. The invention includes processes for the treatment of spent nuclear fuel loaning part of a process for reprocessing, conditioning and/or partitioning nuclear fuels. Reference will be made hereinafter mainly to nuclear fuels but it should be understood that the invention is not restricted to any particular type of material and has application outside the nuclear industry. The processes involve the purification of a substance which is liquid at its operating temperature and at this temperature is comprised wholly or largely of ionic species. Such substances generally fall within one of two main classes, ionic liquids and molten salts. Ionic liquids typically have a melting point of less than 100°C and usually contain an organic cation, whereas molten salts are generally totally inorganic and most commonly have a melting point of at least several hundred degrees Centigrade. Molten salts typically comprise eutectic mixtures, the melting points of which can be significantly depressed from those of the individual components.

### BACKGROUND TO THE INVENTION

In the metals recovery and refining industry generally, the type of metal recoverable from a solvent is dependent upon the size of the electrochemical window of the solvent in which the metal is dissolved, and from which purification and recovery is taking place. In aqueous solutions, this is governed by the electrochemical window of water or supporting electrolyte. This limits the recovery, purification and electroplating of metals on to surfaces from aqueous solution to those metals whose electrode reduction potentials are more positive than the cathodic limit of the aqueous solution. In acidic aqueous solution, metal ions would not be recoverable where their electrode reduction potentials are more negative than that of the H₃O⁺ ion. Recovery of metals with electrode reduction potentials more negative than H₃O⁺, means that non-aqueous (aprotic) solvents are required. There are a number of aprotic solvents which are used. These are often molten salts and, for instance, aluminium is industrially purified electrochemically by electrolysis of Al₂O₃ dissolved in molten cryolite Na₃AlF₆. Other aprotic media include the organic solvents, such as acetonitrile, benzene and toluene.

Molten salts are often used as media in the nuclear industry. Such salts may be eutectic mixtures of salts and comprise chloride salts such as sodium or lithium chloride. These molten salts are typically liquid only at high temperatures. Alternatively, as previously noted, ionic liquids may be employed; the said term may refer to a salt, a mixture of salts, a mixture of components which produce a salt or salts which melts below or just above room temperature. (As used herein, the term "salt" means an entity comprising entirely of cationic and anionic species). The liquids are known as "ionic liquids" although this term is sometimes used for salts which melt at relatively high temperatures. In this specification, the term "ionic liquid" essentially refers to a salt which melts at a temperature of up to 100°C. Ionic liquids free of molecular solvents were first disclosed by Hurley and Wier in a series of US patents (2446331,2446349,2446350).

Common features of ionic liquids include a zero vapour pressure at room temperature, a high solvation capacity and a large liquid range (for instance, of the order of 300°C). Known ionic liquids include aluminium(III) chloride in combination with an imidazolium halide, a pyridinium halide or a phosphonium halide. Examples include 1-ethyl-3-methylimidazolium chloride, *N-*butylpyridinium chloride and tetrabutylphosphonium chloride. An example of a known ionic liquid system is a mixture of 1-ethyl-3-methylimidazolium chloride and aluminium (III) chloride.

Internationally there are two well developed molten salts processes for the reprocessing/waste conditioning of irradiated nuclear fuel. A process developed by the Dimitrovgrad SSC - RIAR process uses high temperature (1000K) eutectic molten salt mixtures as solvents for the fuel and also as electrolyte systems. In this Russian system the solvent is an eutectic mixture of NaCl/KCl or CsCl/KCl. The process uses chemical oxidants (chlorine and oxygen gases) to react with powdered UO₂ fuel to form higher oxidation state compounds such as UO₂Cl₂ which are soluble in the molten salt. At the cathode the uranium compounds are reduced to UO₂, which forms a dendritic deposit. However, after a period of use the molten salt becomes loaded with fission products which not only begin to affect the quality of the product, but also result in too much heat generation within the salt. These fission products are commonly, but not exclusively, highly active lanthanide or actinide elements which need to be isolated in a suitable form for immobilisation as a waste.

In the process developed by Argonne National Laboratory (ANL) in the USA, molten LiCl/KCl eutectic mixtures are generally used, rather than systems containing sodium or caesium salts, and a high temperature (773K) is again employed. The process treats the spent nuclear fuel by flowing a current to oxidise a uranium anode and form uranium ions in the molten salt electrolyte. At the cathode the uranium is reduced and deposited as uranium metal. The ANL process is, unfortunately, a batch process, since the uranium is collected in a receptacle at the bottom of the apparatus, requiring that the process is interrupted in order that the receptacle may be withdrawn and the product recovered. In addition, the operation of the process is mechanically intense, involving the use of rotating anodes which are designed to scrape the product off the cathodes; difficulties are encountered on occasions due to the seizure of this mechanism.

Co-pending patent application PCT/GB99/00246 discloses a method for reprocessing spent nuclear fuel which comprises dissolving the spent fuel or constituent parts of the spent fuel in an ionic liquid to substantially separate fissile material from other components of irradiated fuel. Also disclosed is the subsequent treatment of the resulting ionic liquor, either by solvent extraction or electrochemical treatment to recover the dissolved uranium and plutonium. However, these processes for the clean up of the ionic liquid are disadvantageous from an economic point of view.

Furthermore, whilst the methods described in PCT/GB99/00246 are technically suitable for general use and, in particular, for use in nuclear fuel reprocessing, it has previously been thought that an electrorefining process, which avoids the need for an initial chemical dissolution step, requires the use of a high temperature molten salt electrolyte. If fuel is chemically oxidatively dissolved, there is less control over the species which are dissolved during this step. All those species which will be oxidised by the oxidising agent added will enter into the solution. Because the oxidising agents and conditions are aggressive, most species will dissolve except for species such as the noble metals.

Co-pending patent application PCT/GB00/03194 discloses a method for separating a metal from a composition including the said metal, the method comprising forming an electrolytic cell having an anode, a cathode and an electrolyte, wherein the anode comprises a composition including the metal and the electrolyte comprises an ionic liquid, and applying a sufficient potential difference between the anode and the cathode to cause the metal to transfer from the anode to the cathode and to be deposited thereon.

However, when this method is applied to a composition which comprises a metal or metal compound comprising a uranium or a transuranic element, problems of criticality may arise, since ionic liquids serve as moderators in such systems. In such circumstances, the difficulties may be obviated by placing a limit on the allowable diameter of the electrochemical cell. The present inventors have found that particular advantages may be achieved by increasing the surface area per unit volume of the anode and cathode and reducing the electrode separation, thereby maximising the cell current. In addition, it is beneficial to provide high electrolyte velocities, which result in a scouring action, helping to remove dendritic growth on the cathode, and also provide turbulent flow, thus reducing the boundary layer and subsequently increasing the mass transfer coefficient. The advantages initially observed with uranium and transuranic elements are also applicable in the case of a wide range of other metals and metal compositions, and the process of the present invention has been found to be equally advantageous when using electrolytes which comprise molten salts, rather then ionic liquids.

### STATEMENTS OF INVENTION

Thus, according to the present invention there is provided an electrorefining process for the reprocessing of spent nuclear fuel, which comprises a process for separating a metal from a composition including the said metal, the process comprising forming an electrorefining cell having an anode, a cathode and an electrolyte, wherein the anode comprises the metal and the electrolyte comprises a substance which is liquid at its operating temperature and at this temperature is comprised wholly or largely of ionic species, and applying a sufficient potential difference between the anode and the cathode to cause the metal to transfer from the anode to the cathode and to be deposited thereon, wherein the gap between the anode and the cathode is minimised, the available surface area of the cathode is maximised by providing the metal of the cathode in a form which has a large surface area per unit volume, and the electrolyte is circulated at high velocity through the cell, said high velocity comprising a velocity in the range from 0.6 m/sec to 25 m/sec.

The cell is designed such that the anode-cathode gap is minimised and the available surface area of the cathode is maximised, such that the mass transfer coefficient is increased, leading to maximisation of the rate of operation. The returned electrolyte is such as to create turbulent flow which further increases the rate of mass transfer as well as facilitating removal of uranium from the cathode. This again increases the rate of the process and prevents electrical shorting between anode and cathode, which could result from growing metallic dendrites.

The provision of the metal in a form which exhibits a large surface area per unit volume facilitates increased efficiency of the electrorefining process and enables the cell to be simply constructed, thereby leading to lower costs.

Once electrotransport is underway, the electrolyte is pumped at high velocity though the cell and, in particular, against the internal cathode surface; this reduces the boundary layer, thereby facilitating increased rates of electrotransportation as well as sweeping the electrodeposit from the surface of the cathode. The boundary layer is the layer wherein the ion transport is subject to diffusion control, and its build-up should therefore be kept to a minimum in order to ensure the highest rates of transport between the two electrodes. Since the exterior surface of the cathode may also be subject to electrodeposition, pumping against this surface is also necessary. In the alternative, however, the external surface may be coated with an insulating layer in order to avoid this phenomenon.

Desirably, the inter-electrode gap between the anode and the cathode should be in the range of from 1 mm to 30 mm and, in combination with the electrolyte velocity in the stated range from 0.6 m/sec to 25 m/sec, these parameters are designed to maintain a turbulent flow regime in the cell. Ideally, the fluid flow and electrolyte parameter combination should lead to a Reynolds Number of greater than 2000, and preferably in the region of 3000.

The material which comprises the electrolyte, comprising a substance which is liquid at its operating temperature and at this temperature is comprised wholly or largely of ionic species, typically comprises a molten salt or an ionic liquid.

In a first embodiment of the invention, the anode is in the form of a basket, and the metal composition is provided in a divided form within the said basket.

In a second embodiment of the invention, the metal composition is provided in the form of a long, thin rod which itself forms the anode.

Typically the composition including the metal comprises spent nuclear fuel in the form a metal fuel assembly of fuel pins. These assemblies are firstly dismantled to single pins for feeding to an electrorefiner cell. The first embodiment of the invention then envisages cropping of the said pins into small sections; this may be conveniently carried out by means of a single pin cropping machine. The cropped sections of fuel, which should be as small as possible in order to allow the electrolyte to act on the composition, are then loaded into the anode basket. In practice, a fuel pin is held in a suitable position and incrementally moved forward in order to ensure that the cropped sections are of suitably small dimensions.

Alternatively, according to the second embodiment of the invention, a single fuel pin acts as the anode. Prior to insertion into the electrorefining cell, the cladding of the fuel pin is breached in order to allow the electrolyte to act on the composition. Said operation may conveniently be carried out by, for example, laser cutting. The procedure is generally carried out by ensuring that the fuel pin is held in a suitable position and indexed in order to achieve even removal of cladding, and thereby minimise stressing of the cladding; this also ensures that the pin remains as straight as possible. The pin is then loaded into the electrorefining cell.

Thus, the first embodiment of the invention provides an electrorefining cell which generally comprises a central anode basket, an outer vessel, which is conveniently tubular in shape, and a cathode insulated from the lid and base of the vessel. Preferably the cathode comprises steel, and is cylindrical in shape; it should be non-adherent in order to facilitate removal of metals such as uranium from its surface. The second embodiment of the invention differs from this design in that the fuel pin itself forms the anode. In any event, the cell is designed with provision for the application of an inert atmosphere, and for the removal of fission product off gases to a central off gas treatment system.

The application of a suitable potential difference between the anode and the cathode results in electrochemical oxidation of the metal at the anode, causing it to enter into the liquid electrolyte medium. The soluble metal species is then electro-transported to the cathode where a reduction process occurs, which results in the deposition of the metal at the cathode.

Ideally, the electrorefiner should be designed to have significantly greater length than width, providing a long, thin device which facilitates efficient pumping of the electrolyte through the apparatus. Such a design also maximises the available surface area of the electrodes and is beneficial in delivering the criticality constraints imposed on the system.

When the electrolyte comprises a molten salt, it may comprise any molten salt well known to those skilled in the art. Thus, for example, a LiCl/KCl molten salt eutectic mixture may be used in the process of the invention, for example a LiCl/KCl eutectic melt comprising 41.5 mol.% KCl, with m.p. 361 °C. Preferably, however, the electrolyte comprises an ionic liquid, such as 1-ethyl-3-methylimidazolium chloride

Ionic liquids have advantages over conventional molten salts. As they operate at closer to ambient temperatures, they are probably less aggressive towards construction components, and engineering and process costs are likely to be reduced. They also have advantages over organic solvents such as acetonitrile, in being nonvolatile, with consequent environmental benefits. Furthermore, metal species are usually more soluble in ionic liquids than in organic solvents. In addition, ionic liquids offer the ability to selectively "fine tune" the electrochemical window of the solvent in which the metal is dissolved, and from which purification or recovery is taking place.

Ionic liquids can be used to electrodeposit metals which are generally considered to be electropositive, for example, metals whose electrode reduction potentials are more positive than the H₃O⁺ ion. An ionic liquid can be used for this task if there are benefits of using ionic liquids over aqueous based solutions. An example is the electroplating industry (for instance silver) where there are safety and environmental benefits of using ionic liquids rather than cyanide ion solutions.

Preferably the cation component of the ionic liquid is an organic cation, for instance, a nitrogen heterocycle such as N-substituted pyridinium (preferably alkylpyridinium, for instance, N-butylpyridinium), N,N'-disubstituted imidazolium (preferably N,N'-dialkylimidazolium, for instance, 1-ethyl-3-methylimidazolium), and substituted ammonium and phosphonium, for instance, tetraalkylammonium (for instance, tetraoctylammonium) or tetraalkylphosphonium (for instance, tributyltetradecylphosphonium).

The substituents are preferably hydrocarbyl and more preferably alkyl, which may be branched. The hydrocarbyl (e.g. alkyl) groups usually contain from 1 to 18 carbon atoms and some usually from 1 to 8 carbon atoms.

The cation may therefore preferably be a disubstituted imidazolium ion where the substituent groups take the form CₙH₂ₙ₊₁ for 1 ≤ n ≤ 8, and the substituent groups are linear or branched groups. In preferred disubstituted imidazolium ions one substituent has n = 1, 2, 3 or 4 (of which methyl is particularly preferred) and the other has n = 2, 3, 4, 5, 6, 7 or 8 (of which octyl, hexyl and more particularly butyl are preferred, linear groups being preferred). Alternatively, the cation might be a substituted tetraalkylammonium or tetraalkylphosphonium ion, where the alkyl groups take the form of CₙH₂ₙ₊₁ for 1 ≤ n ≤ 6, and are linear or branched groups. Preferred examples include tetrabutylammonium and tetrabutylphosphonium. However, the alkyl groups are preferably of different lengths resulting in asymmetrical substitution. Alternatively, the cation might be a substituted pyridinium ion, where the substituent group also takes the form CₙH₂ₙ₊₁ for 1 ≤ n ≤ 8, and the substituent groups are linear or branched groups; suitable substituents include butyl, 2-(2-methyl)propyl, 2-butyl and octyl but straight chain alkyl, especially butyl, is preferred.

The ionic liquid may be a mixture of two or more ionic liquids, which together provide the desired properties such as, for instance, a lower viscosity. An example is a mixture of disubstituted imidazolium in which the components of the mixture have alkyl groups of different lengths, e.g. a mix of 1-octyl-3 methylimidazolium chloride ([emim]Cl) and 1-ethyl-3-methylimidazolium chloride ([omim]Cl).

The anion component is likely to be an inorganic species such as halide (for instance, chloride), nitrate, sulphate, tetrafluoroborate, hexafluorophosphate or tetrachloroaluminate, triflate which is trifluoromethanesulfonate (CF₃SO₃⁻), and bistrifylimide which is bis(trifluoromethanesulfonyl)imide ([CF₃SO₂)₂N]⁻).

Preferably the ionic liquid will be pre-loaded with metal ions, in order that the electrorefining process can be initiated. Such pre-loading may be achieved by, for example, the addition to the ionic liquid of a soluble uranium salt or a salt such as cadmium chloride. Addition of a metal salt, such as cadmium chloride, results in the reaction of this metal salt with uranium metal, creating metal ions in the solution.

Pre-loading with uranium ions may also be achieved by displacement of a metal chloride, such as AgCl or CdCl₂. Alternatively, pre-loading with uranium ions may be achieved by destructive reduction of the electrolyte. At the anode uranium is oxidised to a soluble uranium species and, within a cathode compartment separated from the bulk of the solution, the organic cation of the ionic liquid or sacrificial organic reagent added to it, is destroyed.

In the case of electrolytes which comprise ionic liquids, the cell is operated at around 100°C in order to ensure that the liquid is maintained above its melting point; a suitable heating medium is employed for this purpose.

The process of the invention can be applied to a variety of metal fuel feeds. Preferably the metal composition to be treated is irradiated nuclear fuel and the metal to be separated is uranium. Uranium or a uranium compound, and possibly other transuranic metals or compounds, will be deposited at the cathode in a purified form. Any fission products and transuranics, including plutonium, which are oxidised from the anode together with the uranium, will remain in the electrolyte. After the uranium electrorefining operation has been carried out, the electrolyte is subjected to further processing if plutonium removal is required.

By contrast with a process involving chemical dissolution, in an electrochemical process there can be much greater selectivity of the species to be dissolved. The potential at the anode can be controlled, such that metals which are more electropositive than uranium, and with larger negative Gibbs free energies associated with the species formed in solution, are the only metals which dissolve at the anode. This is the first separation step, as many of the more noble metals will remain behind in an anodic sludge. The electrolyte now contains a solution of metal ions including uranium and those of more electropositive species. A suitable potential is applied at the cathode, whereby uranium and metals less electropositive than uranium are electrodeposited. This should only include uranium, as those less electropositive metals have not been anodically dissolved. It is anticipated that the noble metals will not be rinsed from the anode basket during operation of the cell, due to the design of the basket.

The uranium deposited at the cathode is swept away from the surface of the electrode to the bottom of the vehicle, where it enters a solid/liquid separator, such as a hydrocyclone, where the uranium is removed from the bulk electrolyte stream. The stream of electrolyte is then returned to the top of the electrorefiner, whilst the uranium stream is sent to a further solid/liquid separator where the slurry is further concentrated and the supernatant electrolyte is returned to the system.

The process of the present invention is analogous to the ANL process, wherein a metallic fuel feed is electrorefined and a uranium metal product is collected on a cathode. However, the process of the present invention shows significant advantages over this prior art method in that it is a continuous process and is free from the moving components, such as rotating anodes, which often cause problems with the ANL process. The present process also allows for the use of ionic liquids, as well as molten salts, in its operation.

### DETAILED DESCRIPTION OF THE INVENTION

The invention will now be described in detail, though without limitation, by reference to the accompanying drawings, in which
Figure 1 shows apparatus for performing a process according to a first embodiment of the present invention, and
Figure 2 shows apparatus for performing a process according to a second embodiment of the present invention.

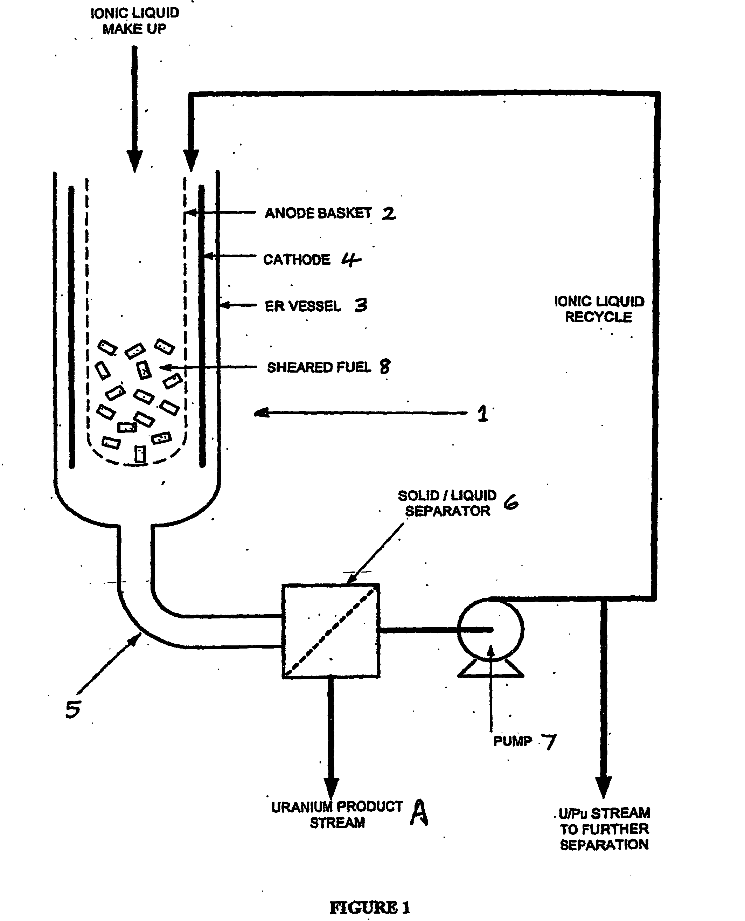

Referring firstly to Figure 1, there is provides an apparatus which comprises an electrorefining cell 1 comprising a central anode basket 2, an outer vessel 3 which is tubular in shape, and a cathode 4, insulated from the lid and base of the vessel. The cathode is cylindrical in shape and preferably comprises stainless steel. A length of piping 5 leads from the electrorefining cell to a solid/liquid separator 6 which incorporates two outlets; from the first outlet issues the metal product stream A, whilst the second outlet is connected to a pump 7 which recycles the electrolyte to the top of the electrorefining cell 1, which also helps to facilitate the removal of dendritic growth. The shredded metal composition, typically cropped sections of spent nuclear fuel 8, is loaded into the anode basket 2 and the electrolyte is introduced tangentially at the top of the cell 1 to immerse the anode basket, together with the cathode.

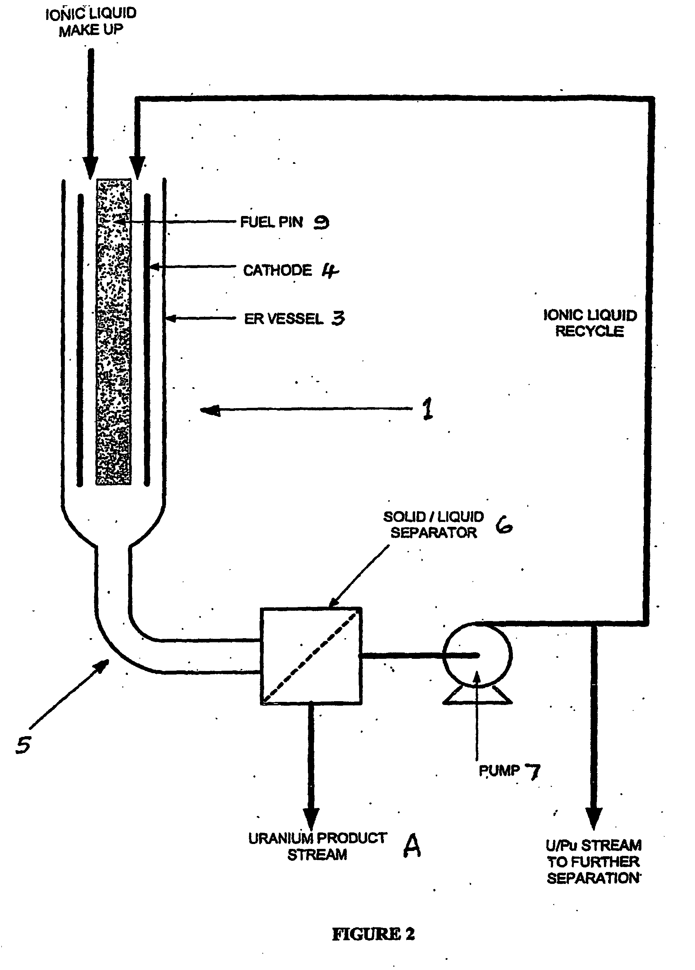

Turning now to Figure 2, there is shown an apparatus which comprises an electrorefining cell 1 comprising a fuel pin 9 which serves as the anode, an outer vessel 3 which is tubular in shape, and a cathode 4, insulated from the lid and base of the vessel. The cathode is cylindrical in shape and preferably comprises stainless steel. A length of piping 5 leads from the electrorefining cell to a solid/liquid separator 6 which incorporates two outlets; from the first outlet issues the metal product stream A, whilst the second outlet is connected to a pump 7 which recycles the electrolyte to the top of the electrorefining cell 1. The electrolyte is introduced tangentially at the top of the cell 1 to immerse the anode and cathode.

In either embodiment, the wall of the electrorefiner is separate from the cathode so as to allow the cathode to be electrically isolated from the rest of the vessel and, in addition, to allow for the provision of secondary containment in the event that the cathode wall should be breached in any way.

In each case, a suitable potential difference is then applied between the anode and cathode, such that the metal is electrochemically oxidised at the anode, and enters into the electrolyte medium. The soluble metal species is then electrotransported to the cathode, where a reduction process occurs. Contaminants with more positive reduction potentials than the metal in question remain unoxidised in the anode basket. Similarly, contaminants with more negative reduction potentials than the metal remain unreduced in solution.

Electroreduction of the soluble metal species then results in the deposition of metal (or a metal compound) at the cathode. Provided that a suitable oxidising potential is applied at the anode and a suitable reduction potential is applied at the cathode, the metal or a compound thereof will be deposited at the cathode in a purified form.

The process is particularly suited to the treatment of spent nuclear fuel, allowing for the recovery of uranium at the cathode. In such a process, the electrolyte will contain fission product compounds and compounds of the actinide elements which are oxidised from the cathode with the uranium and it must be stripped of these contaminants before its subsequent re-use. This may be achieved by any one or a combination of a number of different routes, wherein these contaminants are separated from the electrolyte stream after passing through the pump 7 and removed as a stream B before the electrolyte is recycled to the top of the electrorefining cell 1. Selected fission products and actinides such as plutonium can be electrochemically extracted through the application of a suitable potential using a liquid metal cathode such as a mercury electrode. Alternatively, dissolved plutonium may be co-deposited on a further cathode with uranium, irrespective of whether the metals are deposited in the metallic state (in the (0) oxidation state), as complexes or as oxides. Such codeposition is useful in the manufacture of mixed oxide fuels.

As the electrolyte recycles through the electrorefining cell 1, it sweeps the uranium deposited at the cathode away from the surface of the electrode to the bottom of the vehicle, where it is able to enter the solid/liquid separator 6, where the uranium is removed from the bulk electrolyte stream.

If oxide fuels are to be treated there will probably be a need for a pre-treatment step, such as that performed in the ANL Lithium reduction process, to reduce the oxide fuel and form a metal feed. In the process according to the first embodiment of the invention, the metal fuel may also undergo a decladding process. This could take a number of forms such as mechanical removal or chemical dissolution of the cladding.

Selective deposition of a metal from a solution containing its ions is well known in the art and does not require detailed explanation here. However all metal ions in a solution will have different electrode reduction potentials to reduce the ions to a lower positive valency, or to reduce them to zero valency. Electrode reduction potentials are dependent upon the element, the oxidation state of the ion in the solvent and to the presence of other ions or molecules. If a potential is applied across a solution then all metal ions with a more positive potential will be deposited on the cathode. Metal ions with a more negative potential will remain in solution. Once a particular ion has been removed from the solution, the electrode can be removed and replaced with a new one, biased at a slightly more negative potential, for the deposition of the next metal with a more negative reduction potential. If it is desired to deposit two metals together, then a potential more negative than the reduction potential for both ions is applied.

Fission products may alternatively or additionally be removed from the electrolyte by the addition of an organic solvent. Addition of an organic species results in the precipitation of fission product compounds. The precipitate can be filtered from the electrolyte and calcined to convert to oxide prior to a vitrification step. Cleaned electrolyte can then be recycled to the electrorefiner.

## Claims

1. An electrorefining process for the reprocessing of spent nuclear fuel, which comprises a process for separating a metal from a composition including the said metal, the process comprising forming an electrorefining cell having an anode, a cathode and an electrolyte, wherein the anode comprises the metal and the electrolyte comprises a substance which is liquid at its operating temperature and at this temperature is comprised wholly or largely of ionic species, and applying a sufficient potential difference between the anode and the cathode to cause the metal to transfer from the anode to the cathode and to be deposited thereon, wherein the gap between the anode and the cathode is minimised, the available surface area of the cathode is maximised by providing the metal of the cathode in a form which has a large surface area per unit volume, and the electrolyte is circulated at high velocity through the cell, said high velocity comprising a velocity in the range from 0.6 m/sec to 25 m/sec.

2. An electrorefining process as claimed in claim 1 wherein the inter-electrode gap between the anode and the cathode is in the range of from 1 mm to 30 mm.

3. An electrorefining process as claimed in claim 1 or 2 wherein the fluid flow and electrolyte parameter combination leads to a Reynolds Number of greater than 2000.

4. An electrorefining process as clamed in claim 3 wherein the Reynolds Number is in the region of 3000.

5. An electrorefining process as claimed in any one of claims 1 to 4 wherein the composition including the metal comprises spent nuclear fuel.

6. An electrorefining process as claimed in any one of claims 1 to 5 wherein the anode is in the form of a basket, and the metal composition is provided in a divided form within the said basket.

7. An electrorefining process as claimed in any one of claims 1 to 5 wherein the metal composition is provided in the form of a long, thin rod which itself forms the anode.

8. An electrorefining process as claimed in claim 6 wherein the metal composition comprises an assembly of fuel pins which are dismantled to single pins, cropped into small sections by means of a single pin cropping machine and then loaded into the anode basket.

9. An electrorefining process as claimed in claim 7 wherein the metal composition comprises an assembly of fuel pins which are dismantled to single pins, a single fuel pin then acting as the anode.

10. An electrorefining process as claimed in claim 6 wherein the electrorefining cell comprises a central anode basket, an outer vessel which is tubular in shape, and a cylindrical cathode insulated from the lid and base of the vessel, said cathode comprising steel.

11. An electrorefining process as claimed in claim 7 wherein the electrorefining cell comprises an anode comprising a fuel pin, an outer vessel which is tubular in shape, and a cylindrical cathode insulated from the lid and base of the vessel, said cathode comprising steel.

12. An electrorefining process as claimed in claim 9 or 10 wherein the electrorefining cell additionally comprises a solid-liquid separator.

13. An electrorefining process as claimed in claim 12 wherein said solid/liquid separator comprises a hydrocyclone.

14. An electrorefining process as claimed in any preceding claim wherein the substance which is liquid at its operating temperature and at this temperature is comprised wholly or largely of ionic species comprises a molten salt.

15. An electrorefining process as claimed in claim 14 wherein the molten salt comprises a LiCl/KCl molten salt eutectic mixture.

16. An electrorefining process as claimed in any one of claims 1 to 13 wherein the substance which is liquid at its operating temperature and at this temperature is comprised wholly or largely of ionic species comprises an ionic liquid.

17. An electrorefining process as claimed in claim 16 wherein the cation component of the ionic liquid is an organic cation.

18. An electrorefining process as claimed in claim 17 wherein the organic cation is N-substituted pyridinium, N,N'-disubstituted imidazolium, tetraalkylammonium or tetraalkylphosphonium.

19. An electrorefining process as claimed in claim 18 wherein the organic cation includes alkyl groups which are linear or branched and not all of the same chain length.

20. An electrorefining process as claimed in any one of claims 16 to 19 wherein the anion component is halide, nitrate, sulphate, tetrafluoroborate, hexafluorophosphate or tetrachloroaluminate.

21. An electrorefining process as claimed in any one of claims 16 to 19 wherein the anion component is trifluoromethanesulfonate bis(trifluoromethane sulfonyl)imide.

22. An electrorefining process as claimed in any of claims 16 to 21 wherein the ionic liquid is pre-loaded with metal ions.

23. An electrorefining process as claimed in claim 22 wherein the ionic liquid is pre-loaded with metal ions by the addition of a soluble uranium salt.

24. An electrorefining process as claimed in claim 22 wherein the ionic liquid is pre-loaded with uranium ions by displacement of a metal chloride.

25. An electrorefining process as claimed in claim 24 wherein the metal chloride is AgCl or CdCl₂.

26. An electrorefining process as claimed in claim 22 wherein the ionic liquid is pre-loaded with uranium ions by destructive reduction of the electrolyte.

27. An electrorefining process as claimed in any one of claims 16 to 26 wherein, after use in the process, the ionic liquid is purified for further use.

28. An electrorefining process as claimed in any preceding claim wherein purified metal is deposited at the cathode.

29. An electrorefining process as claimed in any preceding claim wherein the metal is deposited at the cathode as a compound.

30. An electrorefining process as claimed in any preceding claim wherein the metal to be separated is uranium and/or plutonium.

## Patentansprüche

1. Elektroraffinierungsverfahren zur Wiederaufbereitung abgebrannten Kernbrennstoffs, welches ein Verfahren zur Abtrennung eines Metalls aus einer Zusammensetzung umfasst, welche dieses Metall enthält, wobei das Verfahren die Bildung einer Elektroraffinierungszelle, die eine Anode, eine Kathode und einen Elektrolyten besitzt, worin die Anode das Metall umfasst und der Elektrolyt eine Substanz umfasst, die bei deren Betriebstemperatur flüssig ist und bei dieser Temperatur vollständig oder größtenteils aus ionischen Spezies besteht, und das Anlegen einer ausreichenden Potentialdifferenz zwischen der Anode und der Kathode umfasst, um zu bewirken, dass das Metall von der Anode zur Kathode transferiert und darauf abgeschieden wird, worin der Abstand zwischen der Anode und der Kathode minimiert ist, die zur Verfügung stehende Mantelfläche der Kathode dadurch maximiert ist, dass das Metall der Kathode in einer Form bereitgestellt wird, die eine große Mantelfläche pro Volumeneinheit besitzt, und der Elektrolyt bei hoher Geschwindigkeit durch die Zelle zirkuliert wird, wobei diese hohe Geschwindigkeit eine Geschwindigkeit im Bereich von 0,6 m/s bis 25 m/s umfasst.

2. Elektroraffinierungsverfahren gemäß Anspruch 1, worin der Inter-Elekrodenabstand zwischen der Anode und der Kathode im Bereich von 1 mm bis 30 mm liegt.

3. Elektroraffinierungsverfahren gemäß Anspruch 1 oder 2, worin die Kombination der Parameter des Flüssigkeitsstroms und des Elektrolyten zu einer Reynolds-Zahl von größer als 2000 führt.

4. Elektroraffinierungsverfahren gemäß Anspruch 3, worin die Reynolds-Zahl im Bereich von 3000 liegt.

5. Elektroraffinierungsverfahren gemäß irgendeinem der Ansprüche 1 bis 4, worin die Zusammensetzung, welche das Metall einschließt, abgebrannten Kernbrennstoff umfasst.

6. Elektroraffinierungsverfahren, gemäß irgendeinem der Ansprüche 1 bis 5, worin die Anode die Form eines Korbs besitzt und die Metall-Zusammensetzung in verteilter Form innerhalb dieses Korbs bereitgestellt wird.

7. Elektroraffinierungsverfahren gemäß irgendeinem der Ansprüche 1 bis 5, worin die Metall-Zusammensetzung in Form eines langen, dünnen Stabs bereitgestellt wird, der selbst die Anode bildet.

8. Elektroraffinierungsverfahren gemäß Anspruch 6, worin die Metall-Zusammensetzung ein Brennstabbündel umfasst, das in einzelne Stäbe zerlegt, die mittels einer Abstechmaschine für einzelne Brennstäbe in kleine Abschnitte zerschnitten und dann in den Anodenkorb eingebracht werden.

9. Elektroraffinierungsverfahren gemäß Anspruch 7, worin die Metall-Zusammensetzung ein Brennstabbündel umfasst, das in einzelne Stäbe zerlegt wird, wobei ein einzelner Brennstab dann als Anode wirkt.

10. Elektroraffinierungsverfahren gemäß Anspruch 6, worin die Elektroraffinierungszelle einen zentralen Anodenkorb, einen äußeren Behälter, der röhrenförmig ausgebildet ist, und eine zylindrische Kathode umfasst, welche vom Deckel und der Basis des Behälters isoliert ist, wobei diese Kathode Stahl umfasst.

11. Elektroraffinierungsverfahren gemäß Anspruch 7, worin die Elektroraffinierungszelle eine Anode umfasst, welche einen Brennstab, einen äußeren Behälter, der röhrenförmig ausgebildet ist, und eine zylindrische Kathode umfasst, welche vom Deckel und der Basis des Behälters isoliert ist, wobei diese Kathode Stahl umfasst.

12. Elektroraffinierungsverfahren gemäß Anspruch 9 oder 10, worin die Elektroraffinierungszelle zusätzlich einen Fest-Flüssig-Abscheider umfasst.

13. Elektroraffinierungsverfahren gemäß Anspruch 12, worin dieser Fest-Flüssig-Abscheider ein Hydrozyklon ist.

14. Elektroraffinierungsverfahren gemäß irgendeinem der vorangehenden Ansprüche, worin die Substanz, welche bei dessen Betriebstemperatur flüssig ist und bei dieser Temperatur vollständig oder größtenteils aus ionischen Spezies besteht, ein geschmolzenes Salz umfasst.

15. Elektroraffinierungsverfahren gemäß Anspruch 14, worin das geschmolzene Salz eine eutektische Mischung geschmolzenen LiCl/KCl-Salzes umfasst.

16. Elektroraffinierungsverfahren gemäß irgendeinem der Ansprüche 1 bis 13, worin die Substanz, welche bei dessen Betriebstemperatur flüssig ist und bei dieser Temperatur vollständig oder größtenteils aus ionischen Spezies besteht, eine ionische Flüssigkeit umfasst.

17. Elektroraffinierungsverfahren gemäß Anspruch 16, worin die Kationen-Komponente der ionischen Flüssigkeit ein organisches Kation ist.

18. Elektroraffinierungsverfahren gemäß Anspruch 17, worin das organische Kation N-substituiertes Pyridinium, N,N'-disubstituiertes Imidazolium, Tetraalkylammonium oder Tetraalkylphosphonium ist.

19. Elektroraffinierungsverfahren gemäß Anspruch 18, worin das organische Kation Alkylgruppen einschließt, welche linear oder verzweigt sind und nicht alle die gleiche Kettenlänge besitzen.

20. Elektroraffinierungsverfahren gemäß irgendeinem der Ansprüche 16 bis 19, worin die Anionen-Komponente Halogensalz, Nitrat, Sulfat, Tetrafluorborat, Hexafluorphosphat oder Tetrachloraluminat ist.

21. Elektroraffinierungsverfahren gemäß irgendeinem der Ansprüche 16 bis 19, worin die Anionen-Komponente Trifluormethansulfonat [oder] Bis(trifluormethansulfonyl)imid ist.

22. Elektroraffinierungsverfahren gemäß irgendeinem der Ansprüche 16 bis 21, worin die ionische Flüssigkeit mit Metallionen vorbeladen ist.

23. Elektroraffinierungsverfahren gemäß Anspruch 22, worin die ionische Flüssigkeit mittels Zugabe eines löslichen Uran-Salzes mit Metallionen vorbeladen ist.

24. Elektroraffinierungsverfahren gemäß Anspruch 22, worin die ionische Flüssigkeit mittels Austausch eines Metallchlorids mit Uranionen vorbeladen ist.

25. Elektroraffinierungsverfahren gemäß Anspruch 24, worin das Metallchlorid AgCl oder CdCl₂ ist.

26. Elektroraffinierungsverfahren gemäß Anspruch 22, worin die ionische Flüssigkeit mittels destruktiver Reduktion des Elektrolyten mit Uranionen vorbeladen ist.

27. Elektroraffinierungsverfahren gemäß irgendeinem der Ansprüche 16 bis 26, worin die ionische Flüssigkeit nach der Verwendung in dem Verfahren zur weiteren Verwendung gereinigt wird.

28. Elektroraffinierungsverfahren gemäß irgendeinem der vorangehenden Ansprüche, worin gereinigtes Metall an der Kathode abgeschieden wird.

29. Elektroraffinierungsverfahren gemäß irgendeinem der vorangehenden Ansprüche, worin das Metall an der Kathode als Verbindung abgeschieden wird.

30. Elektroraffinierungsverfahren gemäß irgendeinem der vorangehenden Ansprüche, worin das abzutrennende Metall Uran und/oder Plutonium ist.

## Revendications

1. Procédé d'électroraffinage pour le retraitement de combustibles nucléaires usagés, qui comprend un procédé de séparation d'un métal d'une composition incluant ledit métal, le procédé comprenant la formation d'une cellule d'électroraffinage ayant une anode, une cathode et un électrolyte, **caractérisé en ce que** l'anode comprend le métal et l'électrolyte comprend une substance qui est liquide à sa température de fonctionnement et à cette température est composée totalement ou largement d'espèces ioniques, et l'application d'une différence de potentiels suffisante entre l'anode et la cathode pour causer le transfert du métal de l'anode vers la cathode et son dépôt dessus, **en ce que** l'intervalle entre l'anode et la cathode est minimisée, la zone surfacique disponible de la cathode est maximisée en fournissant le métal de la cathode sous une forme qui a une grande zone surfacique par unité de volume, et l'électrolyte est mis en circulation à une vitesse élevée à travers la cellule, ladite vitesse élevée comprenant une vitesse de l'ordre de 0,6 m/seconde à 25 m/seconde.

2. Procédé d'électroraffinage selon la revendication 1, **caractérisé en ce que** l'intervalle inter-électrodes entre l'anode et la cathode est de l'ordre de 1 mm à 30 mm.

3. Procédé d'électroraffinage selon la revendication 1 ou 2, **caractérisé en ce que** la combinaison du paramètre de l'électrolyte et d'écoulement fluide mène à un nombre de Reynolds supérieur à 2000.

4. Procédé d'électroraffinage selon la revendication 3, **caractérisé en ce que** le nombre de Reynolds est de l'ordre de 3000.

5. Procédé d'électroraffinage selon l'une des revendications 1 à 4, **caractérisé en ce que** la composition incluant le métal comprend du combustible nucléaire usagé.

6. Procédé d'électroraffinage selon l'une des revendications 1 à 5, **caractérisé en ce que** l'anode est sous la forme d'un panier, et la composition métallique est prévue sous une forme divisée dans ledit panier.

7. Procédé d'électroraffinage selon l'une des revendications 1 à 5, **caractérisé en ce que** la composition métallique est fournie sous la forme d'une tige longue fine qui forme elle-même l'anode.

8. Procédé d'électroraffinage selon la revendication 6, **caractérisé en ce que** la composition métallique comprend un ensemble d'aiguilles de combustibles qui est démonté en des aiguilles simples, coupé selon des petites sections aux moyens d'une machine de coupage d'aiguille simple, puis ensuite chargé dans le panier anode.

9. Procédé d'électroraffinage selon la revendication 7, **caractérisé en ce que** la composition métallique comprend un ensemble d'aiguilles de combustibles qui est démonté en des aiguilles simples, une simple aiguille de combustible agissant alors comme l'anode.

10. Procédé d'électroraffinage selon la revendication 6, **caractérisé en ce que** la cellule d'électroraffinage comprend un panier d'anode central, un récipient extérieur qui est tubulaire en forme et une cathode cylindrique isolée du couvercle et de la base du récipient, ladite cathode comprenant de l'acier.

11. Procédé d'électroraffinage selon la revendication 7, **caractérisé en ce que** la cellule d'électroraffinage comprend une anode comprenant une aiguille de combustible, un récipient extérieur qui est tubulaire en forme et une cathode cylindrique isolée du couvercle et de la base du récipient, ladite cathode comprenant de l'acier.

12. Procédé d'électroraffinage selon la revendication 9 ou 10, **caractérisé en ce que** la cellule d'électroraffinage comprend de manière supplémentaire un séparateur solide/liquide.

13. Procédé d'électroraffinage selon la revendication 12, **caractérisé en ce que** ledit séparateur solide/liquide comprend un hydrocyclone.

14. Procédé d'électroraffinage selon l'une des revendications précédentes, **caractérisé en ce que** la substance, qui est liquide à sa température de fonctionnement et qui à cette température est composée totalement ou largement d'espèces ioniques, comprend un sel en fusion.

15. Procédé d'électroraffinage selon la revendication 14, **caractérisé en ce que** le sel en fusion comprend un mélange eutectique de sel en fusion LiCl/KCl.

16. Procédé d'électroraffinage selon l'une des revendications 1 à 13, **caractérisé en ce que** la substance, qui est liquide à sa température de fonctionnement et qui à cette température est composée totalement ou largement d'espèces ioniques, comprend un liquide ionique.

17. Procédé d'électroraffinage selon la revendication 16, **caractérisé en ce que** le composé cation du liquide ionique est un cation organique.

18. Procédé d'électroraffinage selon la revendication 17, **caractérisé en ce que** le cation organique est un pyridium N-substitué, un imidiazolium N, N'-disubstitué, un tetraalkylammonium ou tetraalkylphosphonium.

19. Procédé d'électroraffinage selon la revendication 18, **caractérisé en ce que** le cation organique inclut les groupes alkyles qui sont linéaires ou ramifiés et qui n'ont pas tous la même longueur de chaînes.

20. Procédé d'électroraffinage selon l'une des revendications 16 à 19, **caractérisé en ce que** le composé anion est halure, nitrate, sulphate, tétrafluoroborate, hexafluorophosphate ou tetrachloroaluminate.

21. Procédé d'électroraffinage selon l'une des revendications 16 à 19, **caractérisé en ce que** le composé anion est trifluorométhanesulfonate bis(trifluorométhane sulfonyl)imide.

22. Procédé d'électroraffinage selon l'une des revendications 16 à 21, **caractérisé en ce que** le liquide ionique est préchargé avec des ions métalliques.

23. Procédé d'électroraffinage selon la revendication 22 , **caractérisé en ce que** le liquide ionique est préchargé avec des ions métalliques par l'ajout d'un sel d'uranium soluble.

24. Procédé d'électroraffinage selon la revendication 22 , **caractérisé en ce que** le liquide ionique est préchargé avec des ions uranium par déplacement d'un chlorure métallique.

25. Procédé d'électroraffinage selon la revendication 24 , **caractérisé en ce que** le chlorure métallique est AgCl ou CdCl₂.

26. Procédé d'électroraffinage selon la revendication 22 , **caractérisé en ce que** le liquide ionique est préchargé avec des ions uranium par réduction destructrice de l'électrolyte.

27. Procédé d'électroraffinage selon l'une des revendications 16 à 26, **caractérisé en ce que**, après utilisation du procédé, le liquide ionique est purifié pour d'autres utilisations.

28. Procédé d'électroraffinage selon l'une des revendications précédentes, **caractérisé en ce que** le métal purifié est déposé sur la cathode.

29. Procédé d'électroraffinage selon l'une des revendications précédentes, **caractérisé en ce que** le métal est déposé sur la cathode sous forme de composé.

30. Procédé d'électroraffinage selon l'une des revendications précédentes, **caractérisé en ce que** le métal devant être séparé est l'uranium et/ou le plutonium.
